# EUROPEAN PATENT SPECIFICATION

(11) **EP 1 388 701 B1**
(45) Date of publication and mention of the grant of the patent: **18.10.2006**
(21) Application number: 02425518.4
(22) Date of filing: 07.08.2002
(51) Int. Cl.: F16L 33/22, F16L 19/065

(54) **Pipe connection with check function**
Rohrverbindung mit Prüfanordnung
Raccord avec fonction de vérification

(43) Date of publication of application: 11.02.2004
(73) Proprietor: Emmeti S.p.A., 31100 Treviso (IT)
(72) Inventor: Visentin, Eros, 33080 Porcia (PN) (IT)
(74) Representative: Petraz, Gilberto Luigi

(56) References cited:
- EP-A- 0 581 678
- EP-A- 0 728 979
- WO-A-01/73330
- CH-A- 688 241
- DE-A- 19 545 361

## Description

### FIELD OF THE INVENTION

The present invention concerns a connection to connect two tubular elements together with a perfect hydraulic seal and mechanical stability. The invention is applied advantageously, but not exclusively, to connect together two ends of pipes made of different material, for example one metal and one non-metal, such as a rubber or plastic pipe, and a threaded metal conduit of a hydraulic device. To be more exact, the connection according to the present invention allows a user, before making the connection definitive by screwing or other type of attachment, to verify visually whether the first tubular element to be connected has been inserted correctly and completely into the connection. This avoids the risk of an insufficient hydraulic seal or even prevents the first tubular element from becoming detached during the passage of liquid under pressure.

### BACKGROUND OF THE INVENTION

There are known numerous connections to connect with a seal two tubular elements, such as for example a fixed metal pipe of a hydraulic device and a removable rubber pipe.

Such connections have to guarantee a perfect seal, even when there are fluids under great pressure, and ensure stability over time against the connected parts becoming detached.

To be more exact, it is known a monoblock-type connection which is described in the Italian patent n. 1.235.095 of which the Applicant is the Proprietor.

It comprises a first inner element and a second inner element, cooperating with the end of a first of the tubular elements, and an outer body threaded internally and able to be screwed to the threaded end of the second of the tubular elements, the three elements of the connection being coaxial.

The pipe to be connected is first inserted in a seating made between the two inner elements.

The second inner element is of the type which can be elastically deformed and advantageously has means on its inner surface to accentuate the grip.

When the outer body is screwed to the second tubular element, the second inner element is tightened due to deformation against the end of the first tubular element, clamping it.

The connection as described heretofore is of the dead type and therefore has the disadvantage that it does not allow to verify, before the connection is made definitive, whether the first tubular element has been inserted correctly and completely into the housing seating.

In fact, if the end of the first tubular element knocks against the means to accentuate the grip, or if it is not inserted until its end-of-travel, there is a risk that the gripping surface of the second inner element is insufficient to guarantee that the connection will remain stable and will hold over time.

EP-A-0.581.678 discloses a connection for tubular elements according to the preamble of claim 1, comprising an outer body, a first inner element, and a second inner element, coaxial to each other and able to be previously assembled in a single block. The outer body is able to be attached to a first tubular element to be connected, an end part of a second tubular element being positioned inside the second inner element and cooperating with the first inner element, the second inner element being able to be elastically deformed to clamp the end part of the second tubular element at the moment the outer body is attached to the first tubular element. However, this document does not disclose any means to check if the second tubular element has been properly inserted inside the connection.

DE-A-19545361 and WO-A-01/73330 disclose different kind of connection or fitting including in one of its components an opening to see inside. However, these documents do not suggest the use of an aperture provided in an outer element and able to be put in correspondence with an open portion of an inner elements so as to allow to verify from the outside the presence of an end part of a first tubular to be connected to a second tubular element.

The Applicant has devised and embodied the present invention to overcome this shortcoming of the state of the art, and to obtain further advantages.

### SUMMARY OF THE INVENTION

The present invention is set forth and characterized essentially in the main claim, while the dependent claims describe other innovative characteristics of the invention.

The purpose of the invention is to achieve a connection of the type mentioned above, by means of which it is possible for a user to control in advance that a first tubular element to be connected is correctly and completely inserted inside, before making the connection with a second tubular element definitive, in order to guarantee that the connection is secure and stable over time.

As already said, a connection according to the present invention comprises an outer body, a first inner element and at least a second inner element, substantially coaxial and wherein an end part of a first tubular element is positioned inside the second inner element and cooperates with the first inner element.

The second inner element is able to be tightened against the first tubular element, clamping it, when the outer body is screwed, or at least attached, to the end, threaded or not, of the second tubular element.

According to one characteristic of the present invention, in order to obtain the purpose mentioned above, the second inner element has at least an open portion on its surface, and there is at least an aperture made on the outer body able to be located in correspondence with the open portion of the second inner element so as to make the position of the first tubular element with respect to the second inner element visible from outside. This allows to verify whether the tubular element has been correctly inserted and whether the gripping surface of the second inner element is sufficient to guarantee that the connection will hold over time.

According to a variant, the outer surface of the first tubular element, near its end, is marked with a recognition sign which indicates a minimum value of the pipe's surface which must be engaged on the second inner element.

In this way, the user can control that the tubular element has been correctly inserted when he finds the recognition sign.

According to one solution of the present invention, the second inner element comprises an open ring, the gap between its free ends defining said open portion. The ring is able to be closed so as to tighten the first tubular element when the outer body is screwed onto the second tubular element.

The type of the second inner element, however, does not limit the field of the present invention and can comprise a metal clamping band, a conventional ring nut or similar elements, provided they define a through aperture or in any case transparent, able to tighten clamp-wise the first tubular element.

According to another variant, the aperture made on the outer body is not through but closed, for example by a transparent sheet to protect the inside of the connection from infiltrations of dust or other dirt.

There can be two or more apertures made on the outer body, advantageously distributed symmetrically on the surface of the outer body itself.

### BRIEF DESCRIPTION OF THE DRAWING

These and other characteristics of the present invention will be apparent from the following description of a preferential form of embodiment, given as a non-restrictive example, with reference to the attached drawing wherein:

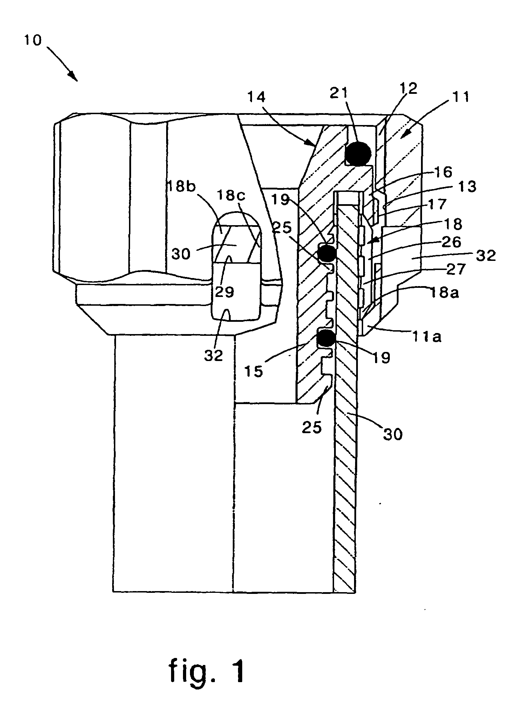

Fig. 1 shows an axial section of a connection according to the present invention.

### DETAILED DESCRIPTION OF A PREFERENTIAL FORM OF EMBODIMENT OF THE INVENTION

With reference to the attached drawing, a connection 10 according to the invention is able to connect a pipe 30, for example made of rubber, with a metal conduit threaded externally, for example that of a tap, not shown in the drawing.

The connection 10 comprises an outer body 11 which has inside a thread 12 able to cooperate with a mating outer thread of the metal conduit to be connected, a first inner element 14 and a second inner element 18. The three elements are assembled in advance and can be moved reciprocally with a certain play, before the pipe 30 and the metal conduit are connected.

The outer body 11 is equipped internally with an annular cavity 13 inside which the first inner element 14 is able to at least partly position itself.

The outer body 11 also comprises a conical lower portion 11a able to cooperate, at the moment of connection, with a mating lower portion 18a, also conical, of the second inner element 18.

According to one characteristic of the present invention, moreover, on the outer body 11 there is at least a through aperture 32, or in any case transparent, able to make the inner zone of the connection 10 visible from the outside, and thus allow to control, as will be described in more detail hereafter, that the pipe 30 has been correctly inserted inside the connection 10.

The through aperture 32 is of elongated shape in the axial direction, that is, the direction in which the pipe 30 is inserted, and is made in the outer body 11 precisely on the side in which it is inserted.

According to a variant which is not shown in the drawing, the through aperture 32 is narrow and flattened in shape, and extends in a direction orthogonal, or inclined, to the direction of insertion.

The first inner element 14 comprises a cylindrical segment 15 which extends for almost all of the axial length of the connection 10, and an annular segment 16 with a wider section, provided with an outer thread 17, which also acts as an abutment positioner of the second inner element 18.

On the outer surface of the cylindrical segment 15 there are ridges 25 able to cooperate through interference with the inner surface of the pipe 30. In the hollows defined by at least some of the ridges 25 sealing rings 19, such as O-rings, are arranged.

Another sealing ring 21 is arranged above the annular segment 16.

The thread 17 is able to cooperate, in a prior assembly step of the connection 10, with the thread 12 of the outer body 11 to position the first inner element 14 inside the cavity 13.

The first inner element 14 cannot come loose, however, from the cavity 13, during the subsequent step of connecting the metal conduit and the pipe 30, unless the user deliberately unscrews the two elements 11, 14 in the opposite direction.

The second inner element 18 is arranged instead between the first inner element 14 and the outer body 11 and is able to be elastically deformed by the outer body 11 by being tightened against the pipe 30.

The second inner element 18 comprises, for example, an open ring 26, whose ends 18b and 18c are closed at the moment of connection in order to clamp the pipe 30.

The two ends 18b and 18c define a cut zone 29, or open portion, in correspondence with which the through aperture 32 is able to be positioned so as to allow the user to see from the outside whether the pipe 30 is correctly inserted.

The open ring 26 also has gripping teeth 27 on its inner surface, able to accentuate the grip on the outer surface of the pipe 30.

The pipe 30 and the conduit are connected as follows.

The end of the pipe 30 is forcefully inserted into the cylindrical segment 15 of the first inner element 14 which has already been inserted inside the seating 13 of the outer body 11.

Said end of the pipe 30 is inserted in an annular cavity defined between the first 14 and the second 18 inner element.

The outer body 11 is then rotated until one of the apertures 32 ia aligned with the open portion 29 of the second inner element 18, and the user verifies if the pipe 30 is completely or sufficiently inserted. That is, he verifies if the pipe 30 is visible in said open portion 29, and has therefore passed beyond the lower edge of the second inner element 18 by a certain extent.

Only if this verification is affirmative is the connection completed, by screwing the outer body 11 to the threaded conduit and clamping the second inner element 18 to the end of the pipe 30.

If on the contrary the upper edge of the pipe 30 is not visible, it means that it has got blocked in a gripping tooth 27, or insertion is not correct, and therefore this situation must be corrected before connection is completed.

It is obvious however that modifications and/or additions of parts can be made to the connection 10 as described heretofore without departing from the spirit and scope of the present invention.

It is also obvious that, although the present invention has been described with reference to specific examples, a skilled person in the art shall certainly be able to achieve many other equivalent forms of connection, all of which shall come within the field and scope of the present claims.

## Claims

1. Connection (10) to connect a first tubular element (30) with a second tubular element, comprising at least an outer body (11) with a nut-shape and having inside a thread (12) able to cooperate with a mating outer thread of the second tubular element to be connected, a first inner element (14), and at least a second inner element (18), said outer body (11) and said first (14) and second (18) inner elements (14, 18) being substantially coaxial to each other, being able to be previously assembled in a single block and being movable reciprocally with a certain play, an end part of said first tubular element (30) being able to be positioned inside said second inner element (18), said second inner element (18) being able to be elastically deformed to clamp said end part of said first tubular element (30) at the moment said outer body (11) is threadedly attached to the second tubular element, **characterized in that** said second inner element (18) has on its surface at least an open portion (29), and **in that** on the surface of said outer body (11) and on the side in which the first tubular element is inserted at least an aperture (32) elongated in the axial direction is made, able to be put in correspondence with said open portion (29) of said second inner element so as to allow to verify from the outside the presence of said end part of said first tubular element (30) and verify the correct insertion thereof.

2. Connection as in claim 1, **characterized in that** said second inner element (18) comprises an open ring (26), the ends (18b, 18c) of which define said open portion (29).

3. Connection as in claim 1, **characterized in that** said second inner element (18) comprises a closed ring-type band, of an elastically deformable type, on which at least a cavity is made, able to define said open portion (29).

4. Connection as in any claim from 1 to 3 inclusive, **characterized in that** said aperture (32) is closed by a transparent element with protective function inside the connection (10).

5. Connection as in claim 1, **characterized in that** it comprises two or more apertures (32) distributed symmetrically on the surface of said outer body (11).

6. Connection as in any claim hereinbefore, with a first tubular element (30) having a recognition sign in a zone near its end, able to indicate that a correct insertion has been achieved.

## Patentansprüche

1. Verbindungselement (10) zum Verbinden eines ersten Rohrelements (30) mit einem zweiten Rohrelement, mit wenigstens einem mutterförmigen äußeren Gehäuse (11), das innen ein Gewinde (12) aufweist, das dazu ausgelegt ist, mit einem dazu passenden Außengewinde des zweiten anzuschließenden Rohrelements zusammenzuwirken, einem ersten Innenelement (14) und wenigstens einem zweiten Innenelement (18), wobei das äußere Gehäuse (11) und das erste und das zweite Innenelement (14, 18) im wesentlichen koaxial zueinander sind und dazu ausgelegt sind, in einem einzelnen Block vormontiert zu werden und sich reziprok mit einem bestimmen Spiel zu bewegen, wobei ein Endteil des ersten Rohrelements (30) dazu ausgelegt ist, innerhalb des zweiten Innenelements (18) angeordnet zu werden, das zweite Innenelement (18) dazu ausgelegt ist, elastisch verformt zu werden, um das Endteil des ersten Rohrelements (30) in dem Moment festzuklemmen, in dem das äußere Gehäuse (11) an das zweite Rohrelement angeschraubt wird, **dadurch gekennzeichnet, daß** das zweite Innenelement (18) an seiner Oberfläche wenigstens einen offenen Abschnitt (29) aufweist, und **dadurch** daß auf der Oberfläche des äußeren Gehäuses (11) und auf der Seite an der das erste Rohrelement eingesetzt ist wenigstens eine in der Axialrichtung gestreckte Öffnung (32) vorgesehen ist, die dazu ausgelegt ist, entsprechend dem offenen Abschnitt (29) des zweiten Innenelements angeordnet zu werden, um von außen die Prüfung zu ermöglichen, ob das Endteil des ersten Rohrelements (30) vorhanden und richtig eingesetzt ist.

2. Verbindungselement nach Anspruch 1, **dadurch gekennzeichnet, daß** das zweite Innenelement (18) einen offenen Ring (26) aufweist, dessen Enden (18b, 18c) den offenen Abschnitt (29) eingrenzen.

3. Verbindungselement nach Anspruch 1, **dadurch gekennzeichnet, daß** das zweite Innenelement (18) ein geschlossenes ringartiges Band elastisch verformbarer Art aufweist, in dem wenigstens ein Hohlraum ausgebildet ist, der dazu ausgelegt ist, den offenen Abschnitt (29) einzugrenzen.

4. Verbindungselement nach einem der Ansprüche 1 bis 3, **dadurch gekennzeichnet, daß** die Öffnung (32) durch ein durchsichtiges Element mit Schutzfunktion innerhalb des Verbindungselements (10) geschlossen ist.

5. Verbindungselement nach Anspruch 1, **dadurch gekennzeichnet, daß** es zwei oder mehr Öffnungen (32) aufweist, die symmetrisch auf der Oberfläche des äußeren Gehäuses (11) verteilt sind.

6. Verbindungselement nach einem der vorstehenden Ansprüche, mit einem ersten Rohrelement (30), das ein Erkennungszeichen in einem Bereich nahe seines Endes aufweist, das dazu ausgelegt ist, anzuzeigen, daß ein richtiges Einsetzen erfolgt ist.

## Revendications

1. Raccord (10) permettant de raccorder un premier élément tubulaire (30) à un deuxième élément tubulaire, comprenant au moins un corps externe (11) en forme d'écrou et comportant à l'intérieur un filetage (12) en mesure de coopérer avec un autre filetage externe correspondant du deuxième élément tubulaire à raccorder, un premier élément interne (14) et au moins un deuxième élément interne (18), ledit corps externe (11) desdits premier (14) et deuxième (18) éléments internes (14, 18) étant sensiblement coaxiaux l'un à l'autre, étant en mesure d'être précédemment assemblés en un seul bloc et pouvant se déplacer selon un mouvement de va-et-vient avec un certain jeu, une partie d'extrémité dudit premier élément tubulaire (30) pouvant être positionnée à l'intérieur dudit deuxième élément interne (18), ledit deuxième élément interne (18) pouvant être déformé élastiquement de manière à serrer ladite partie d'extrémité dudit premier élément tubulaire (30) au moment où ledit corps externe (11) est fixé par filetage audit deuxième élément tubulaire, **caractérisé en ce que** ledit deuxième élément interne (18) comporte, sur sa surface, au moins une portion ouverte (29), et **en ce que**, sur la surface dudit corps externe (11) et sur le côté duquel le premier élément tubulaire est inséré, est ménagée au moins une ouverture (32) allongée dans le sens axial, pouvant être mise en correspondance avec ladite portion ouverte (29) dudit deuxième élément interne de manière à pouvoir vérifier de l'extérieur la présence de ladite partie d'extrémité dudit premier élément tubulaire (30) et de vérifier son insertion correcte.

2. Raccord selon la revendication 1, **caractérisé en ce que** ledit deuxième élément interne (18) comprend une bague ouverte (26), dont les extrémités (18b, 18c) définissent ladite portion ouverte (29).

3. Raccord selon la revendication 1, **caractérisé en ce que** ledit deuxième élément interne (18) comprend une bande de type annulaire fermée d'un type déformable élastiquement, sur laquelle est réalisée au moins une cavité, pouvant définir ladite portion ouverte (29).

4. Raccord selon l'une quelconque des revendications 1 à 3 comprises, **caractérisé en ce que** ladite ouverture (32) est fermée par un élément transparent ayant une fonction protectrice à l'intérieur du raccord (10).

5. Raccord selon la revendication 1, **caractérisé en ce qu'**il comprend deux ouvertures (32) ou plus, réparties d'une manière symétrique sur la surface dudit corps externe (11).

6. Raccord selon l'une quelconque des revendications précédentes, comportant un premier élément tubulaire (30) ayant un signe de repérage dans une zone à proximité de son extrémité, pouvant indiquer qu'une insertion correcte a été atteinte.
